(19) Europäisches Patentamt / European Patent Office / Office européen des brevets

(11) **EP 3 089 437 B1**

(12) **EUROPEAN PATENT SPECIFICATION**

(45) Date of publication and mention of the grant of the patent:
**12.06.2019 Bulletin 2019/24**

(51) Int Cl.:
**H04M 15/00** *(2006.01)*  **H04L 29/08** *(2006.01)*
**H04L 12/14** *(2006.01)*  **H04W 4/24** *(2018.01)*

(21) Application number: **15305647.8**

(22) Date of filing: **28.04.2015**

(54) **A METHOD FOR AGGREGATING NETWORK SERVICE REQUEST RELATED MESSAGING TRAFFIC, A CHARGING TRIGGER FUNCTION MODULE, AN ONLINE CHARGING SYSTEM MODULE AND A COMPUTER PROGRAM PRODUCT**

VERFAHREN ZUM AGGREGIEREN VON BENACHRICHTIGUNGSVERKEHR IM ZUSAMMENHANG MIT NETZWERKDIENSTANFORDERUNG, LADUNGSAUSLÖSUNGSFUNKTIONSMODUL, ONLINE-LADESYSTEMMODUL UND COMPUTERPROGRAMMPRODUKT

PROCÉDÉ D'AGRÉGATION D'UN TRAFIC DE MESSAGE LIÉ À LA REQUÊTE D'UN SERVICE DE RÉSEAU, MODULE À FONCTION DE DÉCLENCHEMENT DE CHARGE, MODULE DE SYSTÈME DE CHARGE EN LIGNE ET PRODUIT LOGICIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2016 Bulletin 2016/44**

(73) Proprietor: **Alcatel Lucent**
**91620 Nozay (FR)**

(72) Inventors:
• **Gupta, Varun**
**122016 Gurgaon (IN)**
• **Goyal, Asheesh Kumar**
**122016 Gurgaon (IN)**

(74) Representative: **Bryers LLP**
**7 Gay Street**
**Bath, Bath and North East Somerset BA1 2PH (GB)**

(56) References cited:
**WO-A1-2014/125102**

• "3rd Generation Partnership Project; Technical Specification Group Services and System Aspects; Telecommunication management; Charging management; Charging architecture and principles (Release 12)", 3GPP DRAFT; 32240-C60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 19 December 2014 (2014-12-19), XP050907351, Retrieved from the Internet: URL:http://www.3gpp.org/ftp/Specs/2014-12/Rel-12/32_series/ [retrieved on 2014-12-19]
• TALEB TARIK ET AL: "An efficient scheme for MTC overload control based on signaling message compression", 2013 IEEE GLOBAL COMMUNICATIONS CONFERENCE (GLOBECOM), IEEE, 9 December 2013 (2013-12-09), pages 342-346, XP032605036, DOI: 10.1109/GLOCOM.2013.6831094 [retrieved on 2014-06-11]
• TALEB T ET AL: "Ensuring Service Resilience in the EPS: MME Failure Restoration Case", GLOBAL TELECOMMUNICATIONS CONFERENCE (GLOBECOM 2011), 2011 IEEE, IEEE, 5 December 2011 (2011-12-05), pages 1-5, XP032118855, DOI: 10.1109/GLOCOM.2011.6133654 ISBN: 978-1-4244-9266-4

- HAKALA L MATTILA ERICSSON J-P KOSKINEN M STURA J LOUGHNEY NOKIA H: "Diameter Credit-Control Application; rfc4006.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 August 2005 (2005-08-01), XP015041993, ISSN: 0000-0003

**Description**

TECHNICAL FIELD

Aspects relate, in general to a method for transmitting network service requests, a charging trigger function module, an online charging system module and a computer program product.

BACKGROUND

Telecommunication network service providers can provide voice and/or data services to subscribers such as telephony, Internet access, broadcasting or multicasting of audio, video, and multimedia programming, and so on. User equipment, such as cell phones, smart phones and so on access the services provided by the communication networks over an air interface with one or more network base stations. Communication between user equipment and base stations are governed by various standards and/or protocols, such as the standards and protocols defined by the 3rd Generation Partnership Project (3GPP, 3GPP2).

Service providers can use offline and online charging functions for charges incurred by users of the various services. Online charging typically affects the service rendered in real-time and a direct interaction of the charging mechanism with session/service control is therefore used. For example, charging information for network resource usage is collected concurrently with the resource usage. However, authorization for the network resource usage must be obtained by the network prior to the actual resource usage. Offline charging is generally defined as a charging mechanism where charging information does not affect the service rendered in real-time. In offline charging, charging information for network resource usage is collected concurrently with resource usage.

A Charging Trigger Function (CTF) for online charging can trigger on execution of a charging event, collect charging information and assemble the charging information into matching charging events. Typically, the CTF then transmits credit request messages to an Online Charging System (OCS) to obtain authorization for the charging event/network resource usage requested by the user. The OCS-CTF architecture necessarily involves the exchange of messages between user equipment and the network in order to enable charging to be properly managed and, in the case of online charging for example, enable the use of services as required.

The use of CTF and OCS modules is discussed in "3rd Generation Partnership Project; Technical Specification Group Services and System Aspects; Telecommunication Management; Charging Management; Charging Architecture and Principles", Release 12, December 2014. Aggregating the content of messages from multiple UEs in a telecommunications network and handling them in bulk to a receiving node whilst avoiding duplication common information elements is described in the paper "An Efficient Scheme for MTC Overload Control Based On Signalling Message Compression" by T. Taleb and A. Ksentini, Proceedings of the 2013 IEEE Global Communications Conference, pp 342 - 346. The use of message aggregation in the context of Tracking Area Updates within a mobile telecommunications network is described in the paper "Ensuring Service Resilience in the EPS: MME Failure Restoration Case" by T. Taleb and K. Samdanis, Proceedings of the 2011 IEEE Global Communications Conference, pp 1-5.

SUMMARY

The present invention provides a method, in a wireless telecommunication network, for transmitting network service requests generated within a given time window between a charging trigger function, CTF, module and an Online Charging System, OCS, module of the network, the method being characterised by the steps of processing the network service requests, at the CTF module, by means of an aggregation rule relating to a degree of commonality among the network service requests to identify network service requests with common attribute values, to determine a plurality of subsets of network service requests, the requests of each subset having respective multiple common attribute-value pairs, AVPs, and generating a master service request message for each subset of network service requests by aggregating the network service requests of each subset, each master service request message including user specific AVPs, and forwarding each master service request message to the OCS module.

The present invention provides a method, in a wireless telecommunication network, for transmitting network service requests generated within a given time window between an Online Charging System, OCS, module and a charging trigger function, CTF, module of the network, the method being characterised by the steps of processing the network service requests, at the OCS module, by means of an aggregation rule relating to a degree of commonality among the network service requests to identify network service requests with common attribute values, to determine a plurality of subsets of network service requests, the requests of each subset having respective multiple common attribute-value pairs, AVPs, and generating a master service request message for each subset of network service requests by aggregating the network service requests of each subset, each master service request message including user specific AVPs, and forwarding each master service request message to the CTF module.

The method can further include parsing the network service requests at the CTF or OCS module to determine common AVPs between the network service requests, and assigning a respective message class to each subset of network service requests. Determining a subset of network service requests can include selecting network service requests of the same assigned message class. The subset of network service requests can be service request messages with temporal-session based commonalities. The network service requests of a subset can be network service requests from a group of users within the time window with a common service request type and/or user location.

The invention also provides a charging trigger function (CTF) module, in a wireless telecommunication network, the CTF module being arranged to transmit network service requests generated within a given time window to an OCS module, the CTF module being arranged to process the network service requests by means of an aggregation rule relating to a degree of commonality among the network service requests to identify network service requests with common attribute values, to determine plurality of subsets of network service requests, the requests of each subset having multiple common attribute-value pairs, AVPs, generate a master service request message for each subset of network service requests by aggregating the network service requests of each subset, each master service request message including user specific AVPs; and forward each master service request message to the OCS module.

The invention also provides an online charging system (OCS) module in a wireless telecommunication network, the OCS module being arranged to transmit network service requests generated within a given time window to a CTF module, the OCS module being arranged to process the network service requests by means of an aggregation rule relating to a degree of commonality among the network service requests to identify network service requests with common attribute values, to determine plurality of subsets of network service requests, the requests of each subset having multiple common attribute-value pairs, AVPs, generate a master service request message for each subset of network service requests by aggregating the network service requests of each subset, each master service request message including user specific AVPs; and forward each master service request message to the CTF module.

The CTF or OCS module can include a traffic flow filter to filter the network service requests and determine common AVPs within the network service requests using a set of aggregation rules, and a traffic flow aggregator to aggregate each subset of network service requests to generate a respective master service request message. The traffic flow aggregator can generate a master service request message comprising common and user-specific portions of a subset of network service requests. The traffic flow filter can assign or associate a respective message class to each subset of network service requests. The traffic flow aggregator can aggregate network service requests with the same assigned message class.

The invention also provides a computer program product, comprising a computer usable medium having computer readable program code embodied therein, said computer readable program code adapted to be executed to implement a method of the invention for transmitting network service request related messaging traffic.

BRIEF DESCRIPTION OF THE DRAWINGS

Embodiments will now be described, by way of example only, with reference to the accompanying drawings, in which:

Figure 1 is a schematic representation of charging system architecture according to an example;

Figure 2 is a schematic representation of aggregation and filtering rules according to an example;

Figure 3 is a schematic representation of an OCS-CTF interaction over a Diameter Interface according to an example; and

Figure 4 is a schematic representation of a charging trigger function module according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Current telecommunication networks provide functions that implement offline and/or online charging mechanisms on the bearer (e.g. GPRS), subsystem (e.g. IMS) and service (e.g. MMS) levels. In order to support these charging mechanisms, the network performs real-time monitoring of resource usage on the above three levels in order to detect the relevant chargeable events.

Offline charging is a process where charging information for network resource usage is collected concurrently with the resource usage. The charging information is processed offline to charge the subscriber post resource usage at periodic billing dates.

Online charging is a process where charging information for network resource usage is collected concurrently with that resource usage in the same fashion as in offline charging. However, authorization for the network resource usage must be obtained by the network prior to the actual resource usage to occur. The authorization phase generally involves reservation of charges for the desired resource/service followed by an actual charge to the subscriber immediately after its usage. This authorization is granted by an Online Charging System (OCS) upon request from the network using a Charging Trigger Function; CTF . The resource usage authorization may be limited in its scope (e.g. volume of data or duration), therefore the authorization may have to be renewed from time to time as long as the user's network resource usage persists. The Online Charging system thus requires the end-users to have a prior authorization in terms of account balance or pre-paid subscriptions and so on to use a service/resource. Thus, online charging is a mechanism where charging information can affect, in real-time, the service rendered and therefore a direct interaction of the charging mechanism with the control of network resource usage is required.

As noted, exchange of messages between user equipment and the network in connection with the OCS-CTF architecture leads to a large bandwidth requirement. According to an example, there is provided a system and method for reducing the total number of message exchanges and hence the bandwidth requirements in OCS-CTF environments. In an example, reduction of required bandwidth can be provided by aggregating similar requests from multiple users initiated by the CTF at a specific instance of time.

Typically, aggregation of request messages at a network CTF have been limited to session messages pertaining to the same subscriber. That is, the CTF may merge requests pertaining to two different services but only if they are initiated by the same user. However, a large proportion of request messages corresponding to similar types of calls and services bear a high commonality in parameters and structures despite corresponding to specific users .

For example, a conventional credit control request (CCR) message over a diameter interface, initiated by the CTF for charging subscribers for a service, could contain as much as 74% generic data that common to all subscribers. The generic data could pertain to addresses of fixed network nodes such as SGSN, GGSN, CTF, OCS and so on.

In addition, certain portions of messages may not be same for all subscribers but may reflect high concurrence for a group of subscribers. For example, information such as type of service units requested, calling location, calling SGSN address and so on. That is, there may be multiple subscribers for which this data is not exactly the same, but for which there is a high degree of correlation or concurrence for the data.

User level aggregation provides a way to aggregate and compress such common service message portions and associate them to differentiated user specific message portions before transmission instead of generating independent user specific requests.

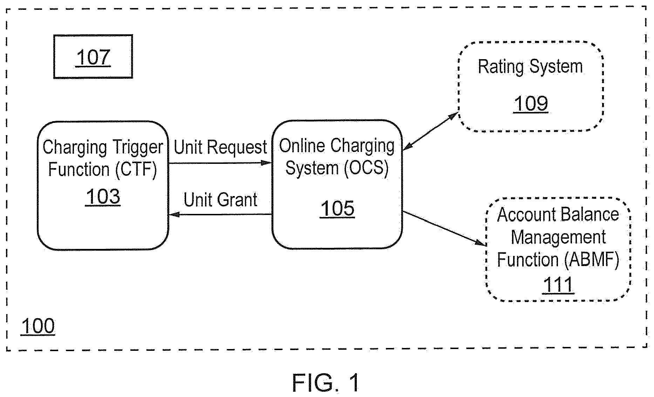

Figure 1 is a schematic representation of charging system architecture according to an example. For online systems, the CTF 103 generates charging events based on the observation of network 100 resource usage. The charging events are forwarded to the Online Charging System (OCS) or function (OCF) 105 in order to obtain authorization for the chargeable event /network resource usage requested by the user 107. The CTF is operable to delay the actual resource usage until permission by the OCS has been granted, and can track the availability of resource usage permission ("quota supervision") during the network resource usage. The CTF can also enforce termination of the end user's 107 network resource usage when permission by the OCS is not granted or expires.

The Rating Function (RF) 109 determines the monetary/non-monetary charge value of the network resource usage received by the OCF from the network on behalf of the OCF. The OCF furnishes the necessary information, obtained from the charging event, to the RF and receives in return the rating output (monetary or non-monetary units). The RF may handle a wide variety of rateable instances, such as:

- Rating of data volume (e.g. based on charging initiated by an access network entity, i.e. on the bearer level);
- Rating of session / connection time (e.g. based on charging initiated by a SIP application, i.e. on the subsystem level);
- Rating of service events (e.g. based on charging of web content or MMS, i.e. on the service level).

The Account Balance Management Function (ABMF) 111 is the location of the subscriber's account balance within the OCS.

Online Charging Systems generally support two modes of rating and charging:

Event Based Charging in which the requested resource is determined and billed in a single shot. The resource usage is debited in a single shot from the subscriber account immediately after processing the charging event, and the permission for the resource usage is returned to the network. An example of this is charging a fixed cost from the end user for downloading an MMS for example.

Session Based Charging in which the OCS cannot know a priori the amount of resources that the end user may eventually consume, or it cannot be assumed a priori that the resource usage request can be (completely) fulfilled. In this case, a certain amount of (monetary or non-monetary) units is blocked, or reserved on the subscriber's account on the OCS and permission to use an amount of resources that matches the unit reservation is returned to the network. When the granted units have been used or a new, not yet authorized chargeable event occurs, the network must send a new request for unit allocation to the OCS. When resource usage has been executed, the actual amount of resource usage (i.e. the used units) must be returned by the network to the OCS so that eventually over-reserved amounts can be re-credited to the subscriber account, assuring that the correct amount gets debited.

Thus, for online session based charging systems there are multiple resource-request and resource-grants message exchanges during the session until the session ceases on account of unit exhaustion or voluntary termination by user. Also these multiple resource-request and resource-grants messages are generated on per user basis.

Hence, in an ecosystem consisting of N users with n active users, each generating m resource-request messages per instance of time, the total number of messages exchanged between CTF and OCS amounts to n * m.

Total messages exchanged between CTF and OCS for an n subscriber system = n * m

Total bandwidth requirements = $n * m * \Omega \mid_{\text{Observation Period} = T}$

where $\Omega$ is the average message size.

Total bandwidth requirement at specific instance of time = $n' * l * \Omega \mid_{\text{Observation Period} \to 0 \,;\, \text{Specific instance of time}}$

Where n' is a subset of n and corresponds to the number of subscribers out of all active subscribers with requests from CTF to OCF generated at the same instance of time.

According to an example, the total number message exchanges and hence the bandwidth requirements in OCS-CTF environments is reduced by aggregating similar message requests from multiple users initiated by the CTF at a specific instance of time.

User level Aggregation provides a way to aggregate and compress such common service message portions and associate them to differentiated user specific message portions before transmission instead of generating independent user specific requests. User level data aggregation can be achieved using various different types of commonalities within request messages in an OCS-CTF environment. For example:

1. Generic Message based Commonalities: such as Network Architecture specific addressing information; protocol release information; message request types and so on.
2. Temporal -Session based Commonalities: which are temporally applicable only to a group of subscribers at a particular instance of time such as type of service requested, Calling location of the Subscriber and so on.

Combining request messages having high commonality between them would result in reduction of signaling traffic by eliminating redundant data exchange and provide a more optimum bandwidth optimization. Although the application depicts an OCS-CTF interface, the idea is extendible to any/all interfaces - SIP/Diameter/SOAP/REST/SS7 and for any application or service. Routing very small messages over interfaces such as IP are often inefficient and result in wastage of bandwidth. For individual messages, which contain a relatively smaller service payload, adding heavier (larger) header information for routing the message is even more inefficient. Such messages are potential candidates for being aggregated at the service level and transmitted as single unit than as independent data units.

Bandwidth savings on account of current session based aggregation per user are limiting in nature. That is, the maximum achievable aggregation within a message is limited to the number of simultaneous services invoked by one particular subscriber. However, in an example, the present method and system provides a unique approach to aggregate multi-user data within the same request. Hence the amount of bandwidth savings become directly proportional to the network traffic. Both approaches are mutually exclusive and may be used concurrently to achieve very high network utilization.

According to an example, multi-user messages from the CTF of a telecommunications network towards an OCS or function can be identified and aggregated such that messages to be aggregated:

1. Correspond to all those messages which are pending to be delivered to OCS at a particular instance of time;
2. Adhere to certain common "User Aggregation Filtering Criterion", which are described in more detail below.

Message aggregation is independent of user identity. Aggregation can depend on the type of request, service, and other aggregation factors and the degree of adherence to filtering criteria. That is, there could be a possibility that CTF may be handling multiple sessions say S1, S2, S3 ... Sn within a specific time window but each user session may generate similar requests at different periodicities. Also two sessions Sx and Sy may or may not always generate requests messages at the same instance of time, every time. Hence aggregation referred to here is not Session/User dependent, but is dependent on which user requests are pending to be sent towards OCS at a specific instance of time and how many out of these could be aggregated.

Aggregated messages reaching OCS can be disaggregated and treated independently for specific users. The response to aggregated messages may/or may not be an aggregated response message, that is, being treated independently or as aggregated messages.

On the basis that, on an average n' requests could be aggregated, then:

$$\text{Total Bandwidth Required over an observation period} = (n * m * \Omega')/n' \,|\, \text{Observation Period} = T$$

$$\text{Total Bandwidth Required at specific instance of time} = 1 * 1 * \Omega' \,|_{\text{Observation Period} \to 0;\ \text{Specific instance of time}}$$

where $\Omega$ is the average message size and $\Omega'$ is the average size of an aggregated message and $\Omega' \ll \Omega * n'$ due to elimination of redundant parameters and message structures. Here, n' is a subset of n and corresponds to the number of subscribers out of all active subscribers whose request from CTF towards are generated at the same instance of time.

$$\text{Total Bandwidth savings over an observation period} = (n * m) [\Omega - \Omega'/n'] \,|_{\text{Observation Period} = T}$$

$$\text{Thus, total bandwidth savings over an observation period} = (n * m) [(\Omega n' - \Omega')/n'] \,|_{\text{Observation Period} = T}$$

Where $\Omega' \ll \Omega * n'$ due to the elimination of redundant parameters. Hence for all cases $(\Omega n' - \Omega') \geq 0$

According to an example, two new layers are introduced within the OCS-CTF architecture: a Traffic Flow Filter Layer (TFF) and a Traffic Flow Aggregator Layer (TFA).

The TFF screens through all requests generated by the core CTF application in in order to identify commonalities and differences in structure in the messages. More particularly, in an example, each request message passes through a set of qualifying aggregation rules to see whether they can be merged. Based on how the message properties match against the various qualifying aggregation criteria, a message class is associated to the message.

Various filtering criterion and aggregation rules are possible. For example, aggregation rules can determine the following in connection with each message generated by the CTF application:

1. Type of Call
2. Serving OCF
3. Degree of Commonality among messages
4. Presence / Absence of certain Message Parameters (e.g. AVPs in a Diameter Interface)
5. Number of Static and Variable parameters within messages
6. Type of Units Requested

Message requests along with their associated message class are sent to the Traffic Flow Aggregator Layer for further processing. The TFA layer thus receives input from the TFF layer and identifies requests to be merged using the message class associated with messages. The TFA layer merges the requests by generating a modified request containing the common and user-specific portions of the independent requests.

Messages belonging to the same message class can be merged into a single outgoing request message but the TFA layer may not aggregate some messages under certain circumstances. For example, the TFA screens the messages belonging to the same message class in order to determine if there is scope for messages to be merged. This may depend on the possibility of merger of specific parameters (already known to TFA) and whether there is a need to reduce bandwidth at that point in time.

The TFA layer can be aware of all the possible User Specific and Network Specific Parameters expected within a message. Additionally, the TFA layer may add an indicator within the signaling message to include an identifier indicating to the peer node that the corresponding request message is an aggregated multi-user request. For instance, in an example where Diameter is used as a interface between the OCS and CTF, a new AVP called "multi-user-information" may be introduced indicating that the request message contains data for multiple users.

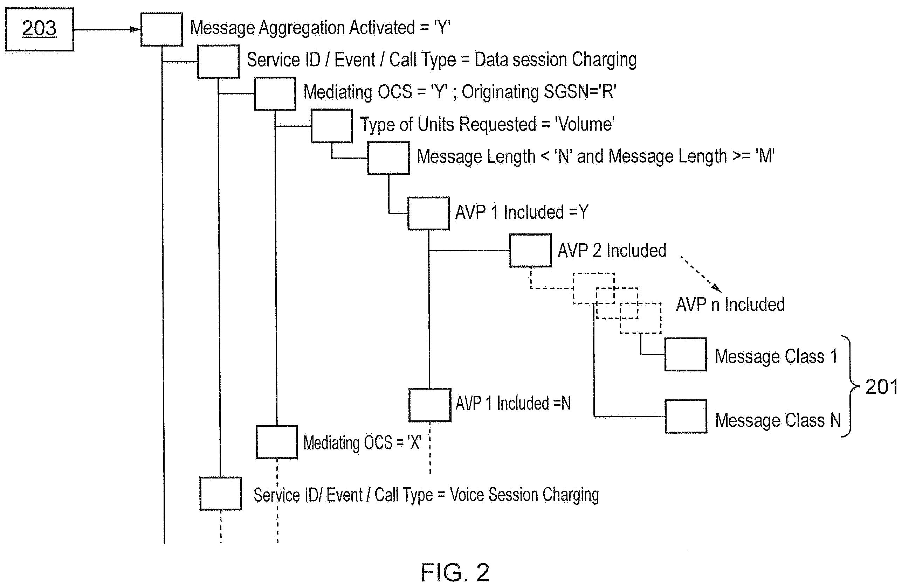

Figure 2 is a schematic representation of aggregation and filtering rules according to an example. Aggregation rules can be implemented at the CTF, which can provide rules to determine which the messages may be aggregated. For example, aggregation rules can be implemented at the Mobile Switching Centre (MSC) or the Gateway GPRS Support node (GGSN) for example, which are core network switch elements in 2G and 3G networks that facilitate call setup and routing. These interface with OCS systems for facilitating charging of subscribers.

For example, a set of aggregation rules may specify that messages for every call of Type: Voice Call, sent to the same OCS Address having certain common message parameters at a particular instance of time are aggregated before sending to OCS.

Accordingly, the rules exemplified in figure 2 can be considered to be a binary tree with various decision points. The leaves 201 are message classes. Each message 203 passes through the filter tree of figure 2 and gets classified into one of the message classes 201. All the messages belonging to or otherwise assigned to a message class can be aggregated and sent as an aggregated message. That is, messages with common parameters are identified so that a single instance of these parameters can be sent in the aggregated message rather than separate parameters, thereby resulting in bandwidth savings.

An aggregation rule relating to a degree of commonality among messages can refer to the parameters and their respective values which are common in requests of similar types. For example, consider two users A and B that have their data/voice sessions ongoing and are latched onto the same CTF in a network. The CTF needs to send a CCR towards the OCS to reserve credit before the call can proceed. In regular call scenarios, these requests for User A and B are treated and sent independently. However, with the present application, the CCR requests for the two users could be aggregated into one in case they happen to be sent at the same instance of time by the CTF. Quite a number of parameters such as Source Address and Destination Address Information, Type of Call and so on might be same for these two similar requests for the two users. There are certain parameters that ought to be user specific and are to be differentiated within an aggregated request, but other common aspects can be provided once, similarly for all messages/and responses to/from OCS/CTF (and not just CCR).

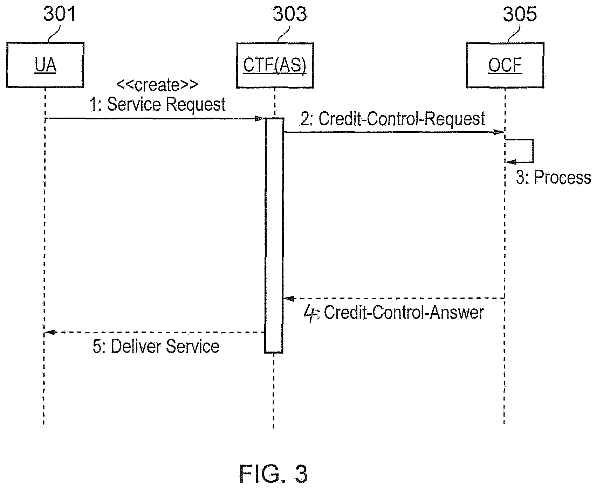

Figure 3 is a schematic representation of an OCS-CTF interaction over a diameter Interface according to an example. Diameter is a well known Authentication Authorization and Accounting (AAA) protocol and typically forms the backbone of service administration in LTE networks including the mechanism to decide what services a user can access, at what Quality of Service (QoS) and how much to bill them. It is not therefore discussed in more detail herein. Figure 3 is a representation of a basic call flow for a single call with diameter as the interface between the CTF and the OCS nodes.

User equipment or apparatus 301 creates a service request at I for transmission to CTF 303, which resides in the access stratum (AS) of a telecommunications network. The CTF generates and transmits a CCR 2 to an OCF 305, which processes the request (3), and provides a credit control answer 4 to the CTF 303. The CTF transmits a message 5 to the UE 301 acknowledging that the service can be delivered. That is, a CTF or is essentially one of the first points in the network a user device 301 gets latched onto and which provides routing functionality. It interacts with OCF (online charging system or function) 305 during a call or other service for call control purposes, and can interact with the OCS to reserve credit in chunks for example, and receive a confirmation from the OCS relating to the sufficiency (or not) of funds available in the user account for a call, for example, to proceed. In an example, interactions between the CTF and OCF are minimized by aggregating relevant messages.

Consider the following CCR requests generated by the CTF towards OCS.

Below is an example of a generic CCR Request Message:

> Frame 4: 870 bytes on wire (6960 bits), 870 bytes captured (6960 bits)
> Ethernet II, Src: Cisco_6a:11:80 (00:23:33:6a:11:80), Dst: Oracle_6f:15:3f (00:21:28:6f:15:3f)
> Internet Protocol Version 4, Src: 10.208.153.160 (10.208.153.160), Dst: 10.208.222.169 (10.208.222. 169)
> Transmission Control Protocol, Src Port: 318 (318), Dst Port: 386, Seq: 1, Ack: 1, Len: 804

Diameter Protocol

Version: 0x01
Length: 804
Flags: 0xc0
Command Code: 272 Credit-Control
ApplicationId: Diameter Credit Control Application (4)
*Hop-by-Hop Identifier: 0x3ecde705*
*End-to-End Identifier: 0x03bafbf5*
*AVP: Session-Id(263) l=52 f=-M- val=b11.lbisn101.nokia.com:1296968521;1476397014*
AVP: Origin-Host(264) l=30 f=-M- val=b11.lbisn101.nokia.com
AVP: Origin-Realm(296) l= 17 f=-M- val=nokia.com
AVP: Destination-Realm(283) l=21 f=-M- val=videotron.com
AVP: Auth-Application-Id(258) l=12 f=-M- val=Diameter Credit Control (4)
AVP: Service-Context-Id(461) l=24 f=-M- val=6.32251@3gpp.org
AVP: CC-Request-Type(416) l=12 f=-M- val=INITIAL_REQUEST (I)
*AVP: CC-Request-Number(415) l=12 f=-M- val=0*
AVP: Destination-Host(293) l=26 f=-M- val=icc2.videotron.com
AVP: Origin-State-Id(278) l= 12 f=-M- val=2
*AVP: Subscription-Id(443) l=40 f=-M-*
*AVP: Subscription-Id(443) l=44 f=-M-*
AVP: Multiple-Services-Indicator(455) l=12 f=-M- val=MULTIPLE_SERVICES_SUPPORTED (I)
*AVP: Multiple-Services-Credit-Control(456) l=28 f=-M-*
AVP: Event-Timestamp(55) l=12 f=-M- val=Feb 6, 2011 05:02:01.000000000 UTC
*AVP: User-Equipment-Info(458) l=44 f=---*
AVP: Service-lnformation(873) l=376 f=VM- vnd=TGPP

Message attribute-value pairs (AVPs) in normal text correspond to generic information AVPs that remain same in all the CCR requests. These contain information such as CTF Address, OCS Address, Type of Diameter Request and so on. Message AVPs that are underlined and in italics correspond to subscriber specific information AVPs that are distinct in all the CCR Requests. The message AVP that is underlined only (at the end of the message) corresponds to an information AVP that is generally common for a group of subscribers and hence may or may not be same in all the CCR Requests. For example the service-information AVP contains information such as Originating Subscriber's location; Originating SGSN Address.

The Traffic Flow Filter layer may group (aggregate) all requests belonging to a common group and resulting in the same AVP structure. The above therefore represents a segregation of a message into common and user specific sections. The below identifies the volume of data for this example:

| Message Headers | Length in bytes including padding |
| --- | --- |
| Frame 4: 870 bytes on wire (6960 bits), 870 bytes captured (6960 bits) | |
| Ethernet II, Src: Cisco_6a:11:80 (00:23:33:6a:11:80), Dst: Oracle_6f:15:3f (00:21:28:6f: 15:3f) | 14 |
| Internet Protocol Version 4, Src: 10.208.153.160 (10.208.153.160), Dst: 10.208.222.169 (10.208.222.169) | 20 |
| Transmission Control Protocol, Src Port: 318 (318), Dst Port: 386, Seq: I, Ack: I, Len: 804 | 32 |
| Diameter Protocol | |
| Version: 0x01 | I |
| Length: 804 | 3 |
| Flags: 0xc0 | I |
| Command Code: 272 Credit-Control | 3 |
| ApplicationId: Diameter Credit Control Application (4) | 4 |
| *Hop-by-Hop Identifier: 0x3ecde705* | 4 |

(continued)

| Message Headers | Length in bytes including padding |
|---|---|
| *End-to-End Identifier: 0x03bafbf5* | 4 |
| *AVP: Session-Id(263) l=52 f=-M- val=b11.lbisn101.nokia.com;1296968521; 1476397014* | 52 |
| AVP: Origin-Host(264) l=30 f=-M- val=b11.lbisn101.nokia.com | 32 |
| AVP: Origin-Realm(296) l=17 f=-M- val=nokia.com | 20 |
| AVP: Destination-Realm(283) l=21 f=-M- val=videotron.com | 24 |
| AVP: Auth-Application-Id(258) l=12 f=-M- val=Diameter Credit Control (4) | 12 |
| AVP: Service-Context-Id(461) l=24 f=-M- val=6.32251@3gpp.org | 24 |
| AVP: CC-Request-Type(416) l=12 f=-M-val=INITIAL_REQUEST (I) | 12 |
| *AVP: CC-Request-Number(415) l=12 f=-M- val=0* | 12 |
| AVP: Destination-Host(293) l=26 f=-M- val=icc2.videotron.com | 28 |
| AVP: Origin-State-Id(278) l=12 f=-M- val=2 | 12 |
| *AVP: Subscription-Id(443) l=40 f=-M-* | 40 |
| *AVP: Subscription-Id(443) l=44 f=-M-* | 44 |
| AVP: Multiple-Services-Indicator(455) l=12 f=-M-val=MULTIPLE_SERVICES_ SUPPORTED (I) | 12 |
| *AVP: Multiple-Services-Credit-Control(456) l=28 f=-M-* | 28 |
| AVP: Event-Timestamp(55) l=12 f=-M- val=Feb 6, 2011 05:02:01.000000000 UTC | 12 |
| *AVP: User-Equipment-Info(458) l=44 f=---* | 44 |
| AVP: Service-Information(873) l=376 f=VM- vnd=TGPP | 376 |
| TOTAL | 870 Bytes |

Accordingly, for the exemplary message noted above, the total size is 870 bytes. It can be seen that the total common bytes for the request message is 642 Bytes (~74%), the total user specific bytes for the request message is 228 Bytes (~26%). Note that, here the TCP/IP and Ethernet parameters remain the same as all the messages are to be routed to the same OCS and same application ports.

According to an example, messages such as those exemplified above, deriving from multiple users are aggregated into one Master Request from the CTF. A new AVP called "multi-user-information AVP" with the AVP Code = 999 can be provided in order to identify such an aggregated message. That is, messages from multiple users that have the same data as noted above in common with another can be aggregated to provide a master request from the users in which the common data AVPs are provided along with user specific data for each of the users. All the user specific information can be combined under multi-user-information AVP.

The OCF 305, upon receipt of a multi-user-information AVP within a request message, can thus identify that the request is one containing request data for multiple users. In an example, it can treat the user specific section within the multi-user-information AVP independently and internally generate multiple CCR requests. These requests can then be treated independently and follow the regular call processing logic. In response, multiple, independent response messages can be generated and transmitted towards the CTF layer.

Assume, for example, that the TFF and TFA evaluate 5 Request Messages that are to be delivered to the OCS and may be aggregated into a Master Request Message based on observations of them belonging to a common service, originating from the same SGSN; destined towards same OCS and requesting similar unit types.

A sample Master Request Message containing requests for 5 such subscribers is depicted below (text in italics is user specific data, whereas the remainder is common for all users):

Modified MULTI-USER AGGREGATED CCR Request Message
Frame 4: 870 bytes on wire (6960 bits), 870 bytes captured (6960 bits)

Ethernet II, Src: Cisco_6a:11:80 (00:23:33:6a:11:80), Dst: Oracle_6f:15:3f (00:21:28:6f:15:3f)
Internet Protocol Version 4, Src: 10.208.153.160 (10.208.153.160), Dst: 10.208.222.169 (10.208.222.169)
Transmission Control Protocol, Src Port: 318 (318), Dst Port: 386, Seq: 1, Ack: 1, Len: 804

Diameter Protocol

Version: 0x01
Length: 804
Flags: OxcO
Command Code: 272 Credit-Control
ApplicationId: Diameter Credit Control Application (4)
AVP: Origin-Host(264) l=30 f=-M- val=b11.Ibisn101.nokia.com
AVP: Origin-Realm(296) l= 17 f=-M- val=nokia.com
AVP: Destination-Realm(283) l=21 f=-M- val=videotron.com
AVP: Auth-Application-Id(258) l=12 f=-M- val=Diameter Credit Control (4)
AVP: Service-Context-Id(461) l=24 f=-M- val=6.32251@3gpp.org
AVP: CC-Request-Type(416) l= 12 f=-M- val=INITIAL_REQUEST (I)
AVP: Destination-Host(293) l=26 f=-M- val=icc2.videotron.com
AVP: Origin-State-Id(278) l= 12 f=-M- val=2
AVP: Multiple-Services-Indicator(455) l=12 f=-M- val=MULTIPLE_SERVICES_SUPPORTED (I)
AVP: Event-Timestamp(55) l= 12 f=-M- val=Feb 6, 2011 05:02:01.000000000 UTC
AVP: Service-lnformation(873) l=376 f=VM- vnd=TGPP
*AVP:Multi-User-Information (999) l=228*
*Hop-by-Hop Identifier: 0x3ecde705*
*End-to-End Identifier: 0x03bafbf5*
*AVP: Session-Id(263) l=52 f=-M- val=b11.Ibisn101.nokia.com;1296968521;1476397014*
*AVP: Subscription-Id(443) l=40 f=-M-*
*AVP: Subscription-Id(443) l=44 f=-M-*
*AVP: Multiple-Services-Credit-Control(456) l=28 f=-M-*
*AVP: User-Equipment-Info(458) l=44 f=---*
*AVP: CC-Request-Number(415) l=12 f=-M- val=0*
*AVP:Multi-User-Information (999) l=228*
*Hop-by-Hop Identifier: 0x3ecde706*
*End-to-End Identifier: 0x03bafbf6*
*AVP: Session-Id(263) l=52 f=-M- val=b11.Ibisn101.nokia.com;1296968522;1476397015*
*AVP: Subscription-Id(443) l=40 f=-M-*
*AVP: Subscription-Id(443) l=44 f=-M-*
*AVP: Multiple-Services-Credit-Control(456) l=28 f=-M-*
*AVP: User-Equipment-Info(458) l=44 f=---*
*AVP: CC-Request-Number(415) l=12 f=-M- val=0*
*AVP:Multi-User-Information (999) l=228*
*Hop-by-Hop Identifier: 0x3ecde707*
*End-to-End Identifier: 0x03bafbf7*
*AVP: Session-Id(263) l=52 f=-M- val=b11.Ibisn101.nokia.com;1296968521;1476397017*
*AVP: Subscription-Id(443) l=40 f=-M-*
*AVP: Subscription-Id(443) l=44 f=-M-*
*AVP: Multiple-Services-Credit-Control(456) 1=28 f=-M-*
*AVP: User-Equipment-Info(458) l=44 f=---*
*AVP: CC-Request-Number(415) l=12 f=-M- val=0*
*AVP:Multi-User-Information (999) l=228*
*Hop-by-Hop Identifier: 0x3ecde708*
*End-to-End Identifier: 0x03bafbf8*
*AVP: Session-Id(263) l=52 f=-M- val=b11.Ibisn101.nokia.com;1296968521;1476397018*
*AVP: Subscription-Id(443) l=40 f=-M-*
*AVP: Subscription-Id(443) l=44 f=-M-*
*AVP: Multiple-Services-Credit-Control(456) l=28 f=-M-*
*AVP: User-Equipment-Info(458) l=44 f=---*
*AVP: CC-Request-Number(415) l=12 f=-M- val=0*

*AVP:Multi-User-Information (999) l=228*
*Hop-by-Hop Identifier: 0x3ecde709*
*End-to-End Identifier: 0x03bafbf9*
*AVP: Session-Id(263) l=52 f=-M- val=b11.lbisn101.nokia.com;1296968521;1476397019*
*AVP: Subscription-Id(443) l=40 f=-M-*
*AVP: Subscription-Id(443) l=44 f=-M-*
*AVP: Multiple-Services-Credit-Control(456) l=28 f=-M-*
*AVP: User-Equipment-Info(458) l=44 f=---*
*AVP: CC-Request-Number(415) l=12 f=-M- val=0*

The original bandwidth requirement (i.e. when 5 independent Request Messages are sent) = 5 * 870 = 4350 Bytes

The new bandwidth requirement (i.e. when I Request Messages is sent containing aggregated data for 5 subscribers)= Common Data + n * User Specific Data = 642 + (5*228) = 1782 Bytes

Thus, the total bandwidth Saved (%) = (4350-1782) / (4350) = 59%

Total bandwidth savings over a period of Time, T, in an ecosystem consisting of N (such as 10000 for example) users with n (say 500 for example) active users, each generating m (say 3 on average for example)Resource-Request Messages per instance of time means that the total number of messages exchanged between CTF and OCS amounts to n * m = 3*500 = 1500.

In a generic implementation, the total bandwidth requirements = $n * m * \Omega$ = 3*500*870 = 1305000 Bytes, where $\Omega$ is the average message size assumed as per the above defined parameter set.

According to an example, assume that on an average n' (say 50 for example) requests could be aggregated. Then, the total bandwidth required over the observation period = $(n * m * \Omega')/n'$ = (500*3*1782)/50 = 534600 Bytes, where n' is a subset of n and corresponds to the average number of subscribers out of all active subscribers whose requests from CTF towards OCS are generated at the same instance of time, and where $\Omega'$ is the average size of an aggregated message (for data of 5 subscribers on an average, in this specific example).

$$\text{Thus, the total bandwidth savings over an observation period} = (n * m ) [\Omega - \Omega'/n']$$

$$= (n * m ) [ (\Omega n' - \Omega')/n']$$

$$= 1305000 - 534600 \text{ Bytes} = 770400 \text{ Bytes}$$

Where $\Omega' << \Omega * n'$ due to elimination of redundant parameters. Hence for all cases $(\Omega n' - \Omega') >= 0$. The bandwidth savings = (77040)/130500 = 59%.

Using this approach, the OCS and other mediating nodes may also aggregate user data while responding to the grant requests. The use case explained above is only illustrative. It provides a broader and an expansive approach to aggregating network messages belonging to multiple users. The idea is extendible to protocols other than diameter; such as signaling over SIP, IP; Proprietary diameter interfaces and to messages other than Request Grant Messages. The approach fully qualifies for non-OCS based environments as well.

Accordingly, combining Request Messages having high commonality between them can result in reduction of signaling traffic by eliminating redundant data exchange and provide a more optimum bandwidth optimization. Although the OCS-CTF interface is described, the idea is extendible to any/all interfaces - SIP/Diameter/SOAP/REST/SS7 and for any application or service.

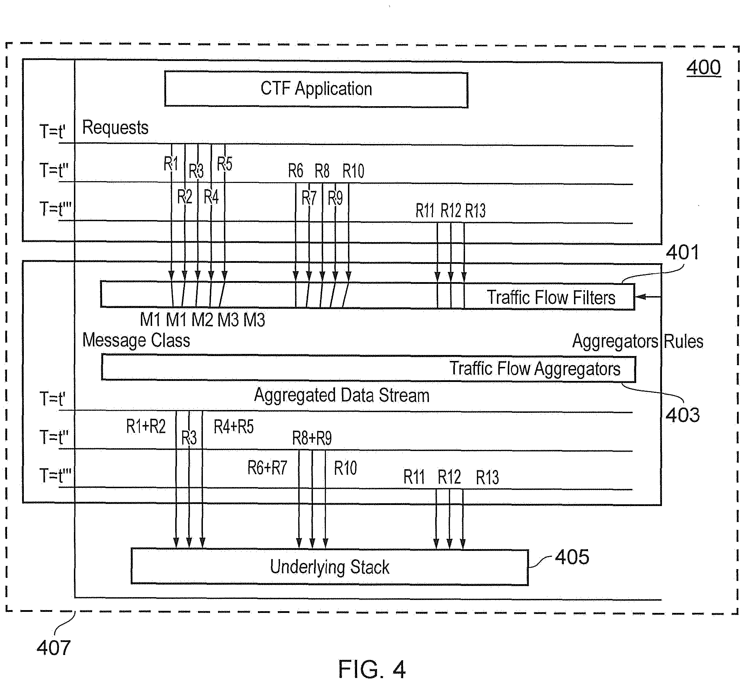

Figure 4 is a schematic representation of a charging trigger function module according to an example. The CTF module 400 of figure 4 includes a traffic flow filter 401 and a traffic flow aggregator 403. Multiple requests (R1, R2, R3 and so on) are depicted. In the example of figure 4, the requests occur at various different instances of time, T. For example, requests R1-R5 are received at CTF module 400 at time T=t'. Traffic flow filter 401 filters the multiple received service request messages and determines common attribute-value pairs within the messages using a set of aggregation rules. The traffic flow aggregator 403 uses the message classes assigned to requests messages to aggregate selected ones of the multiple received service request messages in order to form a master request message that includes user specific AVPs as well as common data that is shared amongst the messages being aggregated.

Traffic flow filter 401 uses a set of aggregation rules, as described above, in order to determine commonalities between messages, and assign or associate a message class to messages based on the commonalities or differences between messages. For example, as described above, messages which are common to one another inasmuch as they relate to the same type of service request, such as a voice call for example, can be assigned the same message class. Other examples of common material that can be used to assign a message class are noted above. Such message requests will include a large proportion of duplicate material between them that can be aggregated for a master request so that there is no redundancy, using traffic flow aggregator 403. That is, common AVPs for example, can be aggregated between messages of the same message class to provide a master request for those messages in which common data between the messages is provided once in the master request. User-specific data for aggregated messages can be included in the master request as noted above, and the master request message can be received and de-aggregated by the underlying service stack 405 of the telecommunication network 407.

Traffic flow aggregator 403 receives input from the filter 401 and merges requests on the basis of the message class assigned to requests. Messages with the same message class can be aggregated. For example, with reference to figure 4, at timer t', five service request messages are received by the CTF module 400, R1-R5. Based on commonalities between the messages, three message classes are assigned to the messages, M I, M2 and M3. That is, requests R1 and R2 are assigned to message class M1, request R3 is assigned to message class M2, and requests R4 and R5 are assigned to message class M3. As a result of the message classes assigned to the requests, aggregator 403 can merge requests R1 and R2 to form aggregated master request R1+R2. Request R3 remains as it was, under message class M2, since no other requests are assigned the same message class and so it is not aggregated. Requests R4 and R5 can be aggregated to form aggregated master request R4+R5 (message class M3). Similar considerations apply to the requests shown in figure 4 at times t'' and t'''.

Master request R1+R2 for example, will include common data from original requests R1 and R2, and also user-specific data from those requests, which may be from different users. The aggregation of the common data results in a bandwidth saving compared to the situation in which both R1 and R2 are passed to the underlying stack separately.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning of the claims are to be embraced within their scope.

**Claims**

1. A method, in a wireless telecommunication network, for transmitting network service requests generated within a given time window between a charging trigger function, CTF, module (103, 303, 400) and an Online Charging System, OCS, module (105, 305) of the network, the method being **characterised by** the steps of:

   processing the network service requests (203), at the CTF module, by means of an aggregation rule relating to a degree of commonality among the network service requests to identify network service requests with common attribute values, to determine a plurality of subsets of network service requests (201), the requests of each subset having respective multiple common attribute-value pairs, AVPs;
   generating a master service request message for each subset of network service requests by aggregating the network service requests of each subset, each master service request message including user specific AVPs; and
   forwarding each master service request message to the OCS module.

2. A method, in a wireless telecommunication network, for transmitting network service requests generated within a given time window between an Online Charging System, OCS, module (105, 305) and a charging trigger function, CTF, module (103, 303, 400) of the network, the method being **characterised by** the steps of:

   processing the network service requests (203), at the OCS module, by means of an aggregation rule relating to a degree of commonality among the network service requests to identify network service requests with common attribute values, to determine a plurality of subsets of network service requests (201), the requests of each subset having respective multiple common attribute-value pairs, AVPs;
   generating a master service request message for each subset of network service requests by aggregating the network service requests of each subset, each master service request message including user specific AVPs; and
   forwarding each master service request message to the CTF module.

3. A method as claimed in claim 1 or 2, comprising the steps of:

   parsing the network service requests at the CTF or OCS module to determine common AVPs between the network service requests; and
   assigning a respective message class to each subset of network service requests.

4. A method as claimed in claim 3, wherein determining a subset of network service requests includes selecting network service requests of the same assigned message class.

5. A method as claimed in claim 1 or 2, wherein a subset of network service requests are service request messages with temporal-session based commonalities.

6. A method as claimed in claim 5, wherein the network service requests of a subset are network service requests from a group of users within the time window with a common service request type and/or user location.

7. A charging trigger function (CTF) module (103, 303, 400) in a wireless telecommunication network, the CTF module being arranged to transmit network service requests generated within a given time window to an OCS module (105, 305), the CTF module being arranged to:

   process the network service requests (203), by means of an aggregation rule relating to a degree of commonality among the network service requests to identify network service requests with common attribute values, to determine a plurality of subsets of network service requests (201), the requests of each subset having respective multiple common attribute-value pairs, AVPs;
   generate a master service request message for each subset of network service requests by aggregating the network service requests of each subset, each master service request message including user specific AVPs; and
   forward each master service request message to the OCS module.

8. An online charging system (OCS) module (105, 305) in a wireless telecommunication network, the OCS module being arranged to transmit network service requests generated within a given time window to a CTF module, the OCS module being arranged to:

   process the network service requests (203), by means of an aggregation rule relating to a degree of commonality among the network service requests to identify network service requests with common attribute values, to determine a plurality of subsets of network service requests (201), the requests of each subset having respective multiple common attribute-value pairs, AVPs;
   generate a master service request message for each subset of network service requests by aggregating the network service requests of each subset, each master service request message including user specific AVPs; and
   forward each master service request message to the CTF module.

9. A module as claimed in claim 7 or 8, comprising:

   a traffic flow filter (401) to filter the network service requests and determine common AVPs within the network service requests using a set of aggregation rules; and
   a traffic flow aggregator (403) to aggregate each subset of network service requests to generate a respective master service request message.

10. A module as claimed in claim 9, wherein the traffic flow aggregator is arranged to generate a master service request message comprising common and user-specific portions of a subset of network service requests.

11. A module as claimed in claim 9 or 10, wherein the traffic flow filter is arranged to assign or associate a respective message class to each subset of network service requests.

12. A module as claimed in claim 11, wherein the traffic flow aggregator is arranged to aggregate network service requests with the same assigned message class.

13. A computer program product, comprising a computer usable medium having computer readable program code embodied therein, said computer readable program code adapted to be executed to implement a method according to any of claims I to 6.

**Patentansprüche**

1. Verfahren in einem drahtlosen Telekommunikations-Netzwerk zum Übertragen von Netzwerkdienst-Anfragen, die innerhalb eines bestimmten Zeitfensters zwischen einem Ladeauslöser-Funktions-, CTF, -Modul (103, 303, 400) und einem Online-Ladesystem-, OCS, - Modul (105, 305) des Netzwerks erzeugt sind, wobei das Verfahren durch die Schritte gekennzeichnet ist:

Verarbeiten der Netzwerkdienst-Anfrage (203) am CTF-Modul mittels einer Aggregationsregel in Bezug auf einen Commonality-Grad innerhalb der Netzwerkdienst-Anfragen zum Identifizieren der Netzwerkdienst-Anfragen mit gemeinsamen Attributwerten zum Bestimmen von mehreren Teilsätzen von Netzwerkdienst-Anfragen (201), wobei die Anfragen jedes Teilsatzes jeweilige multiple gemeinsame Attributwert-Paare AVPs aufweisen;
Erzeugen einer Masterdienst-Anfragenachricht für jeden Teilsatz von Netzwerkdienst-Anfragen durch Aggregieren der Netzwerkdienst-Anfragen jedes Teilsatzes, wobei jede Masterdienst-Anfragenachricht nutzerspezifische AVPs einschließt; und
Weiterleiten jeder Masterdienst-Anfragenachricht an das OCS-Modul.

2. Verfahren in einem drahtlosen Telekommunikationsnetzwerk zum Übertragen von Netzwerkdienst-Anfragen, die innerhalb eines bestimmten Zeitfensters zwischen einem Online-Ladesystem-, OCS, -Modul (105, 305) und einem Ladeauslöser-Funktions-, CTF, -Modul (103, 303, 400) des Netzwerks erzeugt sind, wobei das Verfahren durch die Schritte gekennzeichnet ist:

Verarbeiten der Netzwerkdienst-Anfragen (203) an dem OCS-Modul mittels einer Aggregationsregel in Bezug auf einen Commonality-Grad innerhalb der Netzwerkdienst-Anfragen zum Identifizieren der Netzwerkdienst-Anfragen mit gemeinsamen Attributwerten zum Bestimmen von mehreren Teilsätzen von Netzwerkdienst-Anfragen (201), wobei die Anfragen jedes Teilsatzes jeweilige multiple gemeinsame Attributwert-Paare AVPs aufweisen;
Erzeugen einer Masterdienst-Anfragenachricht für jeden Teilsatz von Netzwerkdienst-Anfragen durch Aggregieren der Netzwerkdienst-Anfragen jedes Teilsatzes, wobei jede Masterdienst-Anfragenachricht nutzerspezifische AVPs einschließt; und
Weiterleiten jeder Masterdienst-Anfragenachricht an das CTF-Modul.

3. Verfahren nach Anspruch 1 oder 2, umfassend die Schritte:

Parsen der Netzwerkdienst-Anfragen am CTF- oder OCS-Modul zum Bestimmen von gemeinsamen AVPs zwischen den Netzwerkdienst-Anfragen; und
Zuordnen einer jeweiligen Nachrichtenklasse zu jedem Teilsatz von Netzwerkdienst-Anfragen.

4. Verfahren nach Anspruch 3, wobei das Bestimmen eines Teilsatzes von Netzwerkdienst-Anfragen das Auswählen von Netzwerkdienst-Anfragen derselben zugeordneten Nachrichtenklasse einschließt.

5. Verfahren nach Anspruch 1 oder 2, wobei ein Teilsatz von Netzwerkdienst-Anfragen Dienstanfrage-Nachrichten mit auf zeitlichen Sessions basierenden Commonalities sind.

6. Verfahren nach Anspruch 5, wobei die Netzwerkdienst-Anfragen eines Teilsatzes Netzwerkdienst-Anfragen von einer Nutzergruppe innerhalb des Zeitfensters mit einem gemeinsamen Dienstanfrage-Typ und / oder Nutzerstandort sind.

7. Ladeauslöser-Funktions- (CTF)-Modul (103, 303, 400) in einem drahtlosen Telekommunikations-Netzwerk, wobei das CTF-Modul angeordnet ist, um Netzwerkdienst-Anfragen zu übertragen, die innerhalb eines bestimmten Zeitfensters an einem OCS-Modul (105, 305) erzeugt sind, wobei das CTF-Modul angeordnet ist, zum:

Verarbeiten der Netzwerkdienst-Anfragen (203) mittels einer Aggregationsregel in Bezug auf einen Commonality-Grad innerhalb der Netzwerkdienst-Anfragen zum Identifizieren von Netzwerkdienst-Anfragen mit gemeinsamen Attributwerten zum Bestimmen einer Vielzahl von Teilsätzen von Netzwerkdienst-Anfragen (201), wobei die Anfragen jedes Teilsatzes jeweilige multiple gemeinsame Attributwert-Paare AVPS aufweisen;
Erzeugen einer Masterdienst-Anfragenachricht für jeden Teilsatz von Netzwerkdienst-Anfragen durch Aggregieren der Netzwerkdienst-Anfrage jedes Teilsatzes, wobei jede Masterdienst-Anfragenachricht nutzerspezifische AVPs einschließt; und
Weiterleiten jeder Masterdienst-Anfragenachricht an das OCS-Modul.

8. Online-Ladesystem- (OCS)-Modul (105, 305) in einem drahtlosen Telekommunikations-Netzwerk, wobei das OCS-Modul angeordnet ist, um Netzwerkdienst-Anfragen zu übertragen, die innerhalb eines bestimmten Zeitfensters an einem CTF-Modul erzeugt sind, wobei das OCS-Modul angeordnet ist, zum:

Verarbeiten der Netzwerkdienst-Anfragen (203) mittels einer Aggregationsregel in Bezug auf einen Commonality-Grad innerhalb der Netzwerkdienst-Anfragen zum Identifizieren von Netzwerkdienst-Anfragen mit gemeinsamen Attributwerten zum Bestimmen einer Vielzahl von Teilsätzen von Netzwerkdienst-Anfragen (201), wobei die Anfragen jedes Teilsatzes jeweilige multiple gemeinsamen Attributwert-Paare AVPS aufweisen;
Erzeugen einer Masterdienst-Anfragenachricht für jeden Teilsatz von Netzwerkdienst-Anfragen durch Aggregieren der Netzwerkdienst-Anfrage jedes Teilsatzes, wobei jede Masterdienst-Anfragenachricht nutzerspezifische AVPs einschließt; und
Weiterleiten jeder Masterdienst-Anfragenachricht an das CTF-Modul.

9. Modul nach Anspruch 7 oder 8, umfassend:

einen Traffic-Flow-Aggregator (401) zum Filtern der Netzwerkdienst-Anfragen und Bestimmen von gemeinsamen AVPs innerhalb der Netzwerkdienst-Anfragen, die einen Satz Aggretationsregeln verwenden; und
einen Traffic-Flow-Filter (403) zum Aggregieren jedes Teilsatzes von Netzwerkdienst-Anfragen zum Erzeugen einer jeweiligen Master-Dienstanfrage-Nachricht.

10. Modul nach Anspruch 9, wobei der Traffic-Flow-Aggregator zum Erzeugen einer Master-Dienstanfrage-Nachricht angeordnet ist, umfassend gemeinsame und nutzerspezifische Abschnitte von Netzwerkdienst-Anfragen.

11. Modul nach Anspruch 9 oder 10, wobei der Traffic-Flow-Filter zum Zuordnen oder Verbinden einer jeweiligen Nachrichtenklasse mit jedem Teilsatz von Netzwerkdienst-Anfragen angeordnet ist.

12. Modul nach Anspruch 11, wobei der Traffic-Flow-Aggregator zum Aggregieren von Netzwerkdienst-Anfragen mit derselben zugeordneten Nachrichtenklasse angeordnet ist.

13. Computerprogramm-Produkt, umfassend ein in einem Computer verwendbares Medium mit einem darin verkörperten computerlesbaren Programmcode, wobei der genannte computerlesbare Programmcode geeignet ist, um ausgeführt zu sein, um ein Verfahren gemäß irgendeinem der Ansprüche nach 1 bis 6 zu implementieren.

**Revendications**

1. Procédé, dans un réseau de télécommunication sans fil, de transmission de requêtes de service de réseau générées au sein d'une fenêtre temporelle donnée entre un module de fonction de déclenchement de facturation, CTF, (103, 303, 400) et un module de Système de Facturation en Ligne, OCS, (105, 305) du réseau, le procédé étant **caractérisé par** les étapes de :

traitement des requêtes de service de réseau (203), au niveau du module de CTF, au moyen d'une règle d'agrégation liée à un degré de caractère commun entre les requêtes de service de réseau, aux fins d'identifier des requêtes de service de réseau ayant des valeurs d'attribut communes dans le but de déterminer une pluralité de sous-ensembles de requêtes de service de réseau (201), les requêtes de chaque sous-ensemble ayant de multiples paires attribut-valeur, AVP, communes respectives ;
génération d'un message de requête de service maître pour chaque sous-ensemble de requêtes de service de réseau par agrégation des requêtes de service de réseau de chaque sous-ensemble, chaque message de requête de service maître comportant des AVP spécifiques d'utilisateur ; et
retransmission de chaque message de requête de service maître au module d'OCS.

2. Procédé, dans un réseau de télécommunication sans fil, de transmission de requêtes de service de réseau générées au sein d'une fenêtre temporelle donnée entre un module de Système de Facturation en Ligne, OCS, (105, 305) et un module de fonction de déclenchement de facturation, CTF, (103, 303, 400) du réseau, le procédé étant **caractérisé par** les étapes de :

traitement des requêtes de service de réseau (203), au niveau du module d'OCS, au moyen d'une règle d'agrégation liée à un degré de caractère commun entre les requêtes de service de réseau, aux fins d'identifier des requêtes de service de réseau ayant des valeurs d'attribut communes dans le but de déterminer une pluralité de sous-ensembles de requêtes de service de réseau (201), les requêtes de chaque sous-ensemble ayant de multiples paires attribut-valeur, AVP, communes respectives ;

génération d'un message de requête de service maître pour chaque sous-ensemble de requêtes de service de réseau par agrégation des requêtes de service de réseau de chaque sous-ensemble, chaque message de requête de service maître comportant des AVP spécifiques d'utilisateur ; et

retransmission de chaque message de requête de service maître au module de CTF.

**3.** Procédé selon la revendication 1 ou 2, comprenant les étapes de :

analyse syntaxique des requêtes de service de réseau au niveau du module de CTF ou d'OCS aux fins de déterminer des AVP communes entre les requêtes de service de réseau ; et

assignation d'une classe de message respective à chaque sous-ensemble de requêtes de service de réseau.

**4.** Procédé selon la revendication 3, dans lequel la détermination d'un sous-ensemble de requêtes de service de réseau comporte la sélection de requêtes de service de réseau de la même classe de message assignée.

**5.** Procédé selon la revendication 1 ou 2, dans lequel un sous-ensemble de requêtes de service de réseau consiste en des messages de requête de service ayant des caractères communs basés sur une session temporelle.

**6.** Procédé selon la revendication 5, dans lequel les requêtes de service de réseau d'un sous-ensemble consistent en des requêtes de service de réseau provenant d'un groupe d'utilisateurs au sein de la fenêtre temporelle ayant un type de requête de service et/ou une localisation d'utilisateur communs.

**7.** Module de fonction de déclenchement de facturation (CTF) (103, 303, 400) dans un réseau de télécommunication sans fil, le module de CTF étant conçu pour transmettre des requêtes de service de réseau générées au sein d'une fenêtre temporelle donnée à un module d'OCS (105, 305), le module de CTF étant conçu pour :

traiter les requêtes de service de réseau (203), au moyen d'une règle d'agrégation liée à un degré de caractère commun entre les requêtes de service de réseau, aux fins d'identifier des requêtes de service de réseau ayant des valeurs d'attribut communes dans le but de déterminer une pluralité de sous-ensembles de requêtes de service de réseau (201), les requêtes de chaque sous-ensemble ayant de multiples paires attribut-valeur, AVP, communes respectives ;

générer un message de requête de service maître pour chaque sous-ensemble de requêtes de service de réseau en agrégeant les requêtes de service de réseau de chaque sous-ensemble, chaque message de requête de service maître comportant des AVP spécifiques d'utilisateur ; et

retransmettre chaque message de requête de service maître au module d'OCS.

**8.** Module de système de facturation en ligne (OCS) (105, 305) dans un réseau de télécommunication sans fil, le module d'OCS étant conçu pour transmettre des requêtes de service de réseau générées au sein d'une fenêtre temporelle donnée à un module de CTF, le module d'OCS étant conçu pour :

traiter les requêtes de service de réseau (203), au moyen d'une règle d'agrégation liée à un degré de caractère commun entre les requêtes de service de réseau, aux fins d'identifier des requêtes de service de réseau ayant des valeurs d'attribut communes dans le but de déterminer une pluralité de sous-ensembles de requêtes de service de réseau (201), les requêtes de chaque sous-ensemble ayant de multiples paires attribut-valeur, AVP, communes respectives ;

générer un message de requête de service maître pour chaque sous-ensemble de requêtes de service de réseau en agrégeant les requêtes de service de réseau de chaque sous-ensemble, chaque message de requête de service maître comportant des AVP spécifiques d'utilisateur ; et

retransmettre chaque message de requête de service maître au module de CTF.

**9.** Module selon la revendication 7 ou 8, comprenant :

un filtre de flux de trafic (401) destiné à filtrer les requêtes de service de réseau et déterminer des AVP communes au sein des requêtes de service de réseau à l'aide d'un ensemble de règles d'agrégation ; et

un agrégateur de flux de trafic (403) destiné à agréger chaque sous-ensemble de requêtes de service de réseau aux fins de générer un message de requête de service maître respectif.

**10.** Module selon la revendication 9, dans lequel l'agrégateur de flux de trafic est conçu pour générer un message de requête de service maître comprenant des parties communes et spécifiques d'utilisateur d'un sous-ensemble de requêtes de service de réseau.

**11.** Module selon la revendication 9 ou 10, dans lequel le filtre de flux de trafic est conçu pour assigner ou allouer une classe de message respective à chaque sous-ensemble de requêtes de service de réseau.

**12.** Module selon la revendication 11, dans lequel l'agrégateur de flux de trafic est conçu pour agréger des requêtes de service de réseau ayant la même classe de message assignée.

**13.** Produit programme d'ordinateur, comprenant un support utilisable par un ordinateur incorporant un code de programme lisible par un ordinateur, ledit code de programme lisible par un ordinateur étant adapté à être exécuté pour mettre en oeuvre un procédé selon l'une quelconque des revendications 1 à 6.

FIG. 1

203 → Message Aggregation Activated = 'Y'

Service ID / Event / Call Type = Data session Charging

Mediating OCS = 'Y' ; Originating SGSN='R'

Type of Units Requested = 'Volume'

Message Length < 'N' and Message Length >= 'M'

AVP 1 Included =Y

AVP 2 Included

AVP n Included

Message Class 1

AVP 1 Included =N

Message Class N

} 201

Mediating OCS = 'X'

Service ID/ Event / Call Type = Voice Session Charging

FIG. 2

FIG. 3

FIG. 4

EP 3 089 437 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Technical Specification Group Services and System Aspects; Telecommunication Management; Charging Management; Charging Architecture and Principles'', Release 12. *3rd Generation Partnership Project,* December 2014

- **T. TALEB ; A. KSENTINI.** An Efficient Scheme for MTC Overload Control Based On Signalling Message Compression. *Proceedings of the 2013 IEEE Global Communications Conference,* 342-346
- **T. TALEB ; K. SAMDANIS.** Ensuring Service Resilience in the EPS: MME Failure Restoration Case. *Proceedings of the 2011 IEEE Global Communications Conference,* 1-5